# EUROPÄISCHE PATENTSCHRIFT

(11) **EP 1 397 453 B1**
(45) Veröffentlichungstag und Bekanntmachung des Hinweises auf die Patenterteilung: **03.08.2005**
(21) Anmeldenummer: 02737954.4
(22) Anmeldetag: 15.04.2002
(51) Int. Cl.: C09J 4/06, C09J 5/00, C08F 265/06

(54) **KLEBVERBUNDE MIT EINER KLEBSCHICHT AUS POLYMETHYLMETHACRYLAT**
ADHESIVE COMPOSITES HAVING AN ADHESIVE LAYER MADE OF POLYMETHYL METHACRYLATE
COMPOSITES ADHESIFS COMPORTANT UNE COUCHE ADHESIVE EN POLYMETHACRYLATE

(30) Priorität: 11.05.2001 DE 10122984
(43) Veröffentlichungstag der Anmeldung: 17.03.2004
(73) Patentinhaber: Röhm GmbH & Co. KG, 64293 Darmstadt (DE)
(72) Erfinder: BLUMENSCHEIN, Michael, 64625 Bensheim (DE)
(86) Internationale Anmeldenummer: PCT/EP2002/004147
(87) Internationale Veröffentlichungsnummer: WO 2002/092710

(56) Entgegenhaltungen:
- EP-A- 0 232 226
- EP-A- 0 548 740
- US-A- 3 333 025
- US-A- 3 476 723
- PATENT ABSTRACTS OF JAPAN vol. 010, no. 245 (C-368), 22. August 1986 (1986-08-22) & JP 61 076578 A (SEMEDAIN KK), 19. April 1986 (1986-04-19)

## Beschreibung

Die Erfindung betrifft Klebverbunde aus mindestens zwei Teilen aus einem thermoplastischen oder thermoelastischen Kunststoff oder Teilen aus einem festen polymeren Naturstoff und einer sich zwischen den Teilen befindlichen Klebeschicht aus Polymethylmethacrylat sowie ein entsprechendes Mehrkomponentenklebstoff-System. Die Erfindung betrifft weiterhin die Verwendung von Dodecylmercaptan als Reaktionszusatz für das Mehrkomponentenklebstoff-System.

### Stand der Technik

Polymerisationsklebstoffe auf Basis von Polymethylmethacrylat-Basis sind bekannt und handelsüblich (siehe z. B. EP-A 548 740 oder EP-A 675 184). Es handelt es sich dabei z. B. um Lösungen von Polymethylmethacrylat in Methylmethacrylat, einem sogenannten Sirup, der mittels eines Polymerisationsinitiators polymerisiert wird. Bei dem Polymerisationsinitiator handelt es sich um einen Radikalstarter, z. B. einen UV-Initiator, einen Redox-Initiator oder einen thermisch oder durch Licht aktivierbaren Radikalstarter. Der Klebstoff kann z. B. in eine V-Nut zwischen die zu verklebenden Teile eingebracht werden, wo er polymerisiert und zu einer besonders festen Verbindung führt.

Handelsüblich und somit analysierbar sind Mehrkomponenten-Klebstoffsysteme (z. B. ACRIFIX® 190, RÖHM GmbH & Co KG, D-64293 Darmstadt), bei denen der Polymethylmethacrylat/Methylmethacrylat-Sirup getrennt vom Polymerisationsinitiator, z. B. einem aromatischen Amin und einem Benzoylperoxid, vorliegt. Zur Verarbeitung werden beide Komponenten gemischt, vorzugsweise entgast, um Bläschenbildungen vorzubeugen und anschließend zwischen die zu verklebenden Teile verbracht, wo das reaktive Gemisch zu einer festen Klebverbindung aushärtet. Die Mehrkomponenten-Klebstoffsysteme können zusätzlich katalysierende Verbindungen wie V₂O₅ und/oder reaktionsverzögernde Verbindungen, wie z. B. Milchsäurederivate, enthalten, die in Kombination mit dem verwendeten Polymerisationsinitiator die Polymerisationsdauer und die Qualität der Klebverbindung beeinflussen.

Derartige Polymersationsklebstoffe eigenen sich zur Verklebung von Teilen, die z. B. aus Acrylnitril-Butadien-Styrol (ABS), Celluloseacetatbutyrat (CAB), Polystyrol PS), Polyvinylchlorid (PVC), Styrol/α-Styrol-Copolymer (S/MS), ungesättigte Polyester (UP) oder Holz bestehen können, insbesondere aber für Teile aus Polymethylmethacrylat PMMA).

Die Klebmittel haben vorzugsweise eine Viskosität im Bereich von 100 bis 5 000 mPa·s bei Raumtemperatur. Bei einer niedrigeren Viskosität besteht die Gefahr, daß das Klebmittel vor der Polymerisation aus der Klebfuge ausläuft. Bei einer höheren Viskosität wird die Anwendung schwieriger. Die geeignete Viskosität läßt sich durch Wahl der Art und Menge des gelösten Methylmethacrylat-Polymeren in der Regel nach Belieben einstellen.

Die Verwendung von Molekulargewichtsreglern wie z. B. Dodecylmercaptan bei der Polymerisation von Methylmethacrylat zu Polymethylmethacrylat zur Herstellung von Formmasse-Granulaten für die Extrusion ist ebenfalls bekannt (s. z.B. EP-A 245 647 = US 4 877 853, EP-A 656 374 = US 5 530 080). Die zitieren Druckschriften betreffen jedoch nicht das Gebiet der Polymerisationsklebstoffe

### Aufgabe und Lösung

Die bekannten Polymerisationsklebstoffe wie z. B. ACRIFIX® 190, RÖHM GmbH & Co KG, Darmstadt liefern gute Kleberesultate, insbesondere bei der Verklebung von Teilen aus Polymethylmethacrylat. Es besteht jedoch ein ständig Bedarf an weiterer Verbesserung. Die bekannten Polymerisationsklebstoffe, bzw. die damit erhaltbaren Klebverbunde auf Basis von Polymethylmethacrylat sollten dahingehend verbessert werden, daß der verbleibende Restmonomergehalt nach Aushärtung gesenkt wird, die Neigung zur Blasenbildung und zur Gelbstichigkeit verringert wird. Weiterhin sollte die Handlingsicherheit durch Verlängerung der möglichen Verarbeitungszeit nach Einleitung des Polymerisationsvorganges verlängert werden, ohne daß die Festigkeit der Klebverbindung verschlechtert wird.

### Die Aufgabe wird gelöst durch einen

Klebverbund aus mindestens zwei Teilen aus einem thermoplastischen oder thermoelastischen Kunststoff oder Teilen aus einem festen polymeren Naturstoff und einer sich zwischen den Teilen befindlichen Klebeschicht herstellbar, indem die Teile in einem Abstand von 0,01 bis 10 mm voneinander fixiert und zwischen die Teile ein zuvor entgastes reaktives Gemisch aus
a) eines Sirups aus
   10 - 50 Gew.-% Polymethylmethacrylat und
   50 bis 90 Gew.-% Methylmethacrylat
b) 0,05 bis 2 Gew.-%, bezogen auf a), eines Polymerisationsinitiators und
c) 0,0001 bis 0,1 Gew.-%, bezogen auf a), einer Reaktionskomponente A auf Vanadiumbasis sowie
d) 0,005 bis 0,1 Gew.-%, bezogen auf a), einer weiteren Reaktionskomponente B
einbringt und als Klebeschicht aushärten lässt,
dadurch gekennzeichnet, daß
als Reaktionskomponente B ein schwefelhaltiger, monofunktioneller Molekulargewichtsregler eingesetzt wird.

Die Aufgabe wird weiterhin gelöst durch ein entsprechendes Mehrkomponentenklebstoff-System geeignet zur Herstellung eines reaktiven Gemischs zur Erzeugung eines Klebverbunds, bestehend aus
a) dem Polymethylmethacrylat/Methylmethacrylat-Sirup
b) dem Polymerisationsinitiator
c) der Reaktionskomponente A auf Vanadiumbasis und
d) der Reaktionskomponente B, die ein schwefelhaltiger, monofunktioneller Molekulargewichtsregler ist,
mit der Maßgabe, daß zumindest die Komponente b) getrennt von der Komponente a) vorliegen muß.

Es war nicht vorhersehbar, daß die gestellte Aufgabe insbesondere durch die Verwendung eines schwefelhaltigen, monofunktionellen Molekulargewichtsreglers als Reaktionszusatz in dem beschriebenen Mehrkomponenten-Klebstoffsystems gelöst werden konnte.

### Ausführung der Erfindung

Das erfindungsgemäße Mehrkomponentenklebstoff-System, geeignet zur Herstellung des reaktiven Gemischs zur Erzeugung des beanspruchten Klebverbunds, besteht aus
a) einem Polymethylmethacrylat/Methylmethacrylat-Sirup
b) einem Polymerisationsinitiator
c) einer Reaktionskomponente A auf Vanadiumbasis und
d) einer Reaktionskomponente B
mit der Maßgabe, daß zumindest die Komponente b) getrennt von der Komponente a) vorliegen muß, damit die Polymerisation nicht vor der Verarbeitung einsetzt. Das reaktive Gemisch kann zusätzlich ein Bläuungsmittel, z. B. einen Violettfarbstoff wie Makrolexviolett B® (Firma Bayer), in einer Konzentration von 0,001 bis 1, bevorzugt 0,01 bis 0,1 ppm enthalten, um leichte Gelbfärbungen, die eventuell im polymerisierten Zustand auftreten können, zu neutralisieren.

### Komponente a)

Der Polymethylmethacrylat/Methylmethacrylat-Sirup ist mengenmäßig die Hauptkomponente des Mehrkomponenten-Klebstoffsystems und besteht aus 40 - 80 Gew.-% Polymethylmethacrylat und 20 bis 60 Gew.-% Methylmethacrylat.

Das Molekulargewicht des eingesetzen Polymethylmethacrylats liegt in der Regel im Bereich von 10 000 bis 1 Million, bevorzugt bei 80.000 bis 150.000 (Gew.-Mittelwert).

Das Methylmethacrylat-Polymere ist zu 40 bis 100 %, vorzugsweise 90 bis 100 % seines Gewichts aus Methylmethacrylat aufgebaut. Mögliche Comonomere sind z. B. Alkylacrylate mit 1 bis 8 Kohlenstoffatomen im Alkylrest oder Alkylmethacrylate mit 2 bis 8 Kohlenstoffatomen im Alkylrest, Acryl- und/oder Methacrylnitril, Styrol oder Vinylester von gesättigten Fettsäuren mit 2 bis 10 Kohlenstoffatomen. In untergeordneten Mengen, etwa bis zu 5 Gew.%, können Monomere mit funktionellen Gruppen, wie Acryl- und/oder Methacrylsäure, deren Hydroxyalkylester oder Aminoalkylester, am Aufbau des Methylmethacrylat-Polymeren beteiligt sein. Die Art und der Anteil der Comonomeren werden so gewählt, daß das Polymere in geeigneten organischen Lösungsmitteln sowie in Methylmethacrylat löslich ist; aus diesem Grund sind vernetzende Comonomere mit mehr als einer ethylenisch ungesättigten, radikalisch polymerisierbaren Gruppe weniger geeignet. Methylmethacrylat-Polymere aus 90 bis 100 Gew.-% Methylmethacrylat und zum verbleibenden Teil aus niederen Alkylacrylaten mit 1 bis 4 Kohlenstoffatomen im Alkylrest sind besonders geeignet. Bevorzugt sind Polymerisate aus 90 bis 98 Gew.-% Methylmethacrylat und 2 bis 10 Gew.-% Methylacrylat.

Das Methylmethacrylat-Polymere macht zusammen mit flüssigem, monomerem Methylmethacrylat einen Anteil von wenigstens 90 Gew.-% des Klebmittels, vorzugsweise 96,9 bis 99,9 Gew.-% aus. Neben Methylmethacrylat können andere monoethylenisch ungesättigte, damit copolymerisierbare Monomere, wie solche, die als Comonomere für das Methylmethacrylat-Polymere genannt worden sind, einen begrenzten Teil, etwa bis zu 10 Gew.-% des gesamten Klebmittels ausmachen.

Neben Methylmethacrylat als Monomer kann der Sirup auch gegebenenfalls weitere copolymerisierbare Monomere enthalten, wie sie auch im Polymeren enthalten sein können. Weniger bevorzugt, jedoch auch möglich, ist der Zusatz von vernetzenden mehrfunktionellen Monomeren wie z. B. di-, tri- oder tetrafunktionellen (Meth)acrylaten, Allylverbindungen wie z. B. Allyl(meth)acrylat oder Triallylcyanurat. Geeignete Mengen an Comonomeren sollten weniger als 5 Gew.-%, z. B. 0,01 bis 2 oder 0,05 bis 1 Gew.-% betragen.

### Komponente b)

### Der Polymerisationsinitiator

Beispielhaft für Polymerisationsinitiatoren seien genannt: Azoverbindungen wie 2,2'-Azobis-(isobutyronitril) oder 2,2'-Azobis(2,4-dimethylvaleronitril), RedoxSysteme, wie beispielsweise die Kombination von tertiären Aminen mit Peroxiden oder bevorzugt Peroxide (vgl. hierzu beispielsweise H. Rauch-Puntigam, Th. Völker, "Acryl- und Methacrylverbindungen", Springer, Heidelberg, 1967 oder Kirk-Othmer, Encyclopedia of Chemical Technology, Vol. 1, Seiten 386ff, J. Wiley, New York, 1978). Beispiele geeigneter Peroxid-Polymerisationsinitiatoren sind Dilauroylperoxid, tert.-Butylperoctoat, tert.-Butylperisononanoat, Dicyclohexylperoxidicarbonat, Dibenzoylperoxid oder 2,2-Bis-(tert.-butylperoxy)-butan. Man kann auch bevorzugt die Polymerisation mit einem Gemisch verschiedener Polymerisationsinitiatoren unterschiedlicher Halbwertzeit durchführen, beispielsweise Dilauroylperoxid und 2,2-Bis-(tert.-butylperoxy)-butan, um den Radikalstrom im Verlauf der Polymerisation sowie bei verschiedenen Polymerisationstemperaturen konstant zu halten. Die eingesetzten Mengen an Polymerisationsinitiator liegen im allgemeinen bei 0,05 bis 2 Gew.-%, bevorzugt 0,2 bis 0,8 Gew.-%, besonders bevorzugt 0,3 bis 0,7 Gew.-% bezogen auf die Komponente a). Besonders bevorzugt wird ein Peroxid-Polymerisationsinitiator, insbesondere ein Cyclohexanon-Peroxid, z. B. 50 %-ig, phlegmatisiert in Triethylphosphat verwendet.

### Komponente c)

Der Reaktionszusatz A auf Vanadiumbasis kann auch auch als Katalysator auf Vanadiumbasis bezeichnet werden und wird in einer Menge, bezogen auf Komponente a), von 0,0001 bis 0,1 Gew.-%, bevorzugt 0,0002 bis 0,01 Gew.-%, besonders bevorzugt 0,0003 bis 0,001 Gew.-% eingesetzt. Geeignet ist z. B. V₂O₅. Bevorzugt stellt man eine konzentrierte Stamm-Lösung aus 0,1 bis 1 Gew.-% V₂O₅, z. B. 0,2% in einem geeigneten Lösungsmittel, z. B. saurem Butylphosphit / Butylphosphat bereit. Von dieser konzentrierten Stamm-Lösung stellt man eine Gebrauchslösung her, z. B. 10 %-ig durch Verdünnen mit einem geeigneten Lösungsmittel, z. B. Dibutylphthalat oder bevorzugt Acetyltributylcitrat. Eine 0,2%-ige Stammlösung und eine davon abgeleitete 10%-ige Gebrauchslösung kann z. B. zu 3 Gew.-% zugegeben werden, so daß sich eine Zugabemenge von 0.0006 Gew.-% V₂O₅ ergibt.

### Komponente d)

Geeignet sind Reaktionszusatz B, die schwefelhaltige, monofunktionelle Molekulargewichtsregler sind und in einer Menge von 0,005 bis 0,1, bevorzugt 0,01 bis 0,05 Gew.-%, bezogen auf a) eingesetzt werden. Bevorzugt wird Dodecylmercaptan eingesetzt. Auch hier kann man eine Gebrauchslösung z. B. 10 %-ig z. B. in Methylmethacrylat oder bevorzugt in Acetyltributylcitrat vorhalten und von dieser z. B. 0,3 Gew.-% zugeben. Acetyltributylcitrat wird bevorzugt, weil die Gebrauchslösung meist länger verwendbar ist. Bei Methylmethacrylat kann es gelegentlich auch trotz Zusatz von Stabilisatoren zu unerwünschter Polymerisation in der Gebrauchslösung kommen. Der Reaktionszusatz B könnte auch als Reaktionsverzögerer oder Reaktionsbeschleuniger bezeichnet werden. Letztlich trägt der Reaktionszusatz B wesentlich zur guten Handlingsicherheit bei. Das heißt, daß eine vergleichsweise lange Topfzeit nach der eine gleichmäßige und durchgehende Aushärtung einsetzt erreicht wird, die sich auch in den niedrigen Restmonomergehalten zeigt.

### Viscositäten

Die Viskosität des reaktiven Gemischs liegt bei einer Standardformulierung im Bereich von 2000 bis 3500, bevorzugt 2500 bis 3000 mPas, kann aber gegebenenfalls durch Zugabe von Methylmethacrylat auf einem Wert von 100 bis 1000, bevorzugt 200 bis 500 mPas einstellt werden. Letzteres ist insbesondere günstig wenn größere Teile verklebt werden sollen.

### Klebverbunde

Das erfindungsgemäße Mehrkomponentenklebstoff-System eignet sich zur Herstellung von Klebverbunden aus mindestens zwei Teilen aus einem thermoplastischen oder thermoelastischen Kunststoff oder Teilen aus einem festen, bevorzugt polymeren Naturstoff und der sich zwischen den Teilen befindlichen Klebeschicht. Dazu müssen die zu verklebenden Teile in einem Abstand von 0,01 bis 10, bevorzugt 1 bis 5, besonders bevorzugt 2 bis 4 mm voneinander fixiert und zwischen die Teile ein zuvor entgastes reaktives Gemisch aus den Komponenten a) bis d), gegebenenfalls mit Methylmethacrylat auf die gewünschte Viscosität verdünnt, gegeben werden.

Der Raum zwischen den Teilen wird dazu zweckmäßigerweise am Rand mit einer Schnur oder einem Klebeband oder sonstigen Verschalungsteilen abgedichtet, bis auf eine Öffnung zum Einfüllen des flüssigen Gemischs.
Je nach zu verklebendem Material und Dicke kann die Aushärtungszeit bei Temperaturen von im Bereich von 10 bis 40 °C, bevorzugt 15 bis 30 °C für mindestens eine Stunde, bevorzugt mehrere Stunden, z. B. 1 bis 6, bevorzugt 2 bis 3 oder z. B. 3 bis 5 Stunden betragen. Das Verarbeitungsfenster beträgt in etwa 15 bis 60, meist 20 bis 50 Minuten, je nach Viscosität, Temperatur und Mengenanteilen der Komponente a) bis d).

Es können z. B. Teile aus Acrylnitril-Butadien-Styrol (ABS), Celluloseacetatbutyrat (CAB), Polymethylmethacrylat PMMA), Polystyrol PS), Polyvinylchlorid (PVC), Styrol/α-Styrol-Copolymer (S/MS), Ungesättigte Polyester (UP) Holz oder sogar Metallen verklebt werden.

Insbesondere eignet sich das Mehrkomponentenklebstoff-System zum Verkleben von Teilen aus extrudiertem Polymethylmethacrylat, insbesondere für Teile aus gegossenem Polymethylmethacrylat, aus denen z. B. Aquarienscheiben hergestellt werden sollen. Da diese häufig sehr großen und schweren Teilen vor Ort verklebt werden und anschließend nicht mehr getempert werden, ist der niedrige Restmonomergehalt hier besonders von vorteilhaft.

Bei größeren Teilen empfiehlt es sich generell, insbesondere ab er bei Teilen aus Polymethylmethacrylat, den Klebverbund nach dem Aushärten zusätzlich bei Temperaturen zwischen 65 und 85 °C zu tempern, um Materialspannungen auszugleichen und um den Restmonomergehalt zu senken. Die Dauer des Temperns kann je nach Materialstärke Stunden bis mehrere Tage dauern. Auf diese Weise kann die Gefahr von späterer Weißfärbung bzw. Mikrorißbildung vermindert werden.

Klebverbunde aus Polymethylmethacrylat können zusätzlich bei Temperaturen von 110 bis 170 °C, meist von 130 bis 150 °C thermisch verformt werden, wobei z. B. Formtemperaturen von 150 bis 180 °C eingehalten werden können.
Die Verklebung kann auch ausgeführt werden, indem man eines der zu verklebenden Teile mit einer Schicht des flüssigen Klebmittels beschichtet und mit dem anderen Teile möglichst blasenfrei zusammengefügt. Man kann auch die Teile trocken aneinanderfügen und das Klebmittel durch Kapillarkraft in die Klebfuge einziehen lassen.
Das Klebmittel in der Klebfuge härtet bei einer Temperatur im Bereich von 10 bis 70 °, bevorzugt zwischen 15 und 45 °C am besten aus. Höhere Temperaturen können zur Verdunstung flüchtiger Bestandteile, niedrige Temperaturen zu längeren Härtungszeiten führen. Die gehärtete Klebschicht weist noch Restmonomergehalte an Methylmethacrylat von höchstens 6 %, im allgemeinen in Bereich von 3 bis 5,5 Gew.-% aus. Nach Temperung können Werte im Bereich von 0,2 bis 0,6 Gew.-% erreicht werden.

Günstig sind die maximal auftretenden, vergleichsweise niedrigen Polymersationstemperaturen. Diese liegen bei erfindungsgemäßen reaktiven Gemischen mit einer Viskosität im Bereich von 2000 bis 3500 mPas bei höchstens 105 °C. Bei Gemischen, deren Viscosität durch Zugabe von Methylmethacrylat auf einem Werte in Bereich von 100 bis 1000 mPas einstellt werden, liegt die maximale Polymerisationstemperatur bei höchstens 95 °C.

Die erfindungsgemäßen Klebverbunde genügen höchsten Ansprüchen an Belastbarkeit und Witterungsbeständigkeit. Eine anschließende Temperung kann dabei wiederum von Vorteil sein.

Nach der Polymerisation des Klebers entstehen Klebefugen, deren PMMA-Zusammensetzung meist von der verbundenen PMMA-Teile abweicht und in denen sich noch Reste des Polymerisationsinitiators nachweisen lassen. Auch die Molekulargewichtsverteilung weicht von derjenigen der verklebten PMMA-Teile meistens deutlich ab.

Da monomeres Methylmethacrylat in die zu verklebenden Teile eindringt, kommt es nach der Polymerisation zu Verschlaufung und Pfropfung im Materialverbund. Die optischen Eigenschaften der Klebnaht sind optimal: Sie weist meist keinen Gelbstich auf und härtet sowohl bei Kehlnaht- wie bei Stumpf-Stoß-Verklebung meist völlig blasenfrei aus.

Die hohe Schlagzähigkeit und Zugscherfestigkeit der gehärteten Klebfuge gestattet es, den verklebten Formkörper wie ein einstückiges Formteil zu bearbeiten, z. B. durch Sägen, Fräsen, Bohren, Schleifen oder durch thermoelastische Umformung, wenn die verklebten Teile selbst einer solchen Bearbeitung zugänglich sind.

### Zur Verklebung geeignete Kunststoffe

Unter Polymethylmethacrylat werden Polymerisate des Methylmethacrylats verstanden, die bis zu 50 Gew.-% aus anderen, damit radikalisch mischpolymerisierbaren Monomeren aufgebaut sein können. Vorzugsweise beträgt der Anteil des Methylmethacrylats 80 bis 100 Gew.-%. Als Comonomere kommen in erster Linie Alkylester der Acrylsäure mit 1 bis 4 Kohlenstoffatomen im Alkylrest sowie Acryl- und/oder Methacrylnitril, Styrol oder Maleinsäureanhydrid in Betracht. Bevorzugt sind thermoplastisch und thermoelastisch verformbare Acrylkunststoffe; ihre Viskositätszahl (nach DIN 53 727 bzw. 51 562, Teil 1) liegt vorzugsweise im Bereich von 20 bis 1 500 ml/g.

Die Formteile aus Polymethylmethacrylat können unter Verwendung des erfindungsgemäßen Klebmittels mit Formteilen aus anderen Kunststoffen, wie Hart-PVC, Celluloseestern, Polystyrol, ABS-Kunststoffen oder Polycarbonat verklebt werden. Ihre Vicat-Erweichungstemperatur soll nicht unter 70 ° liegen. Hochvernetzte Kunststoffe, die weder thermoplastisch noch thermoelastisch verarbeitbar sind, sind weniger geeignet. Mit besonderem Vorteil werden die erfindungsgemäßen Klebmittel zum Verkleben von Formteilen aus Polymethylmethacrylat miteinander verwendet.

Das erfindungsgemäße Klebmittel ist auch für die Verklebung von Polymethylmethacrylat mit anderen nicht-kunststoffartigen Materialien, Naturstoffen, wie beispielsweise Glas, Holz oder Metallen brauchbar.

### BEISPIELE

Die Rezepturen werden durch jeweils Vermischen der Komponenten bei ca. 22 °C hergestellt. An der Reaktionslösung bzw. am auspolymerisierten Material können die in der Tabelle zusammengefaßten Meßwerte festgestellt werden.

### Rezeptur A1 (erfindungsgemäß)

a) 96,2 Gew.-% Sirup aus 30 Gew.-% Polymethylmethacrylat und Gew.-% 70 Gew.-% Methylmethacrylat
b) 0,5 Gew.-%, Cyclohexanonperoxid (50 %-ig, phlegmatisiert in Triethylphosphat)
c) 3,0 Gew.-% einer 10 %-igen Gebrauchslösunglösung aus einer 0,2 %-igen V₂O₅ Stammlösung (in saurem Butylphosphit/Butylphosphat) in Acetyltributylcitrat
d) 0,3 Gew.-% einer 10 %-igen Gebrauchslösung Dodecylmercaptan in Acetyltributylcitrat

### Rezeptur A2 (erfindungsgemäß):

Wie A1, jedoch werden, um die Viscosität herabzusetzen, 20 Gew.-% Sirup durch 20 Gew.-% Methylmethacrylat ersetzt.

### Rezeptur B1 (handelsübliches Produkt = Stand der Technik):

a) 96,9 Gew.-% Sirup aus 30 Gew.-% Polymethylmethacrylat und Gew.-% 70 Gew.-% Methylmethacrylat
b) 3 Gew.-% Benzoylperoxid (5 %-ig in Diisobutylphthalat)
c) 0,1 Gew.% einer 12 %-igen Terpinolen (p-Menthadien)-Lösung in Acetyltributylcitrat

### Rezeptur B2:

Wie B1, jedoch werden, um die Viscosität herabzusetzen, 20 Gew.-% Sirup durch 20 Gew.-% Methylmethacrylat ersetzt.

Rezeptur C1 (handelsübliches Produkt = Stand der Technik):
a) 97 Gew.-% Sirup aus 30 Gew.-% Polymethylmethacrylat und Gew.-% 70 Gew.-% Methylmethacrylat
b) 0,5 Gew.-%, Cyclohexanonperoxid (50 %-ig, phlegmatisiert in Triethylphosphat)
c) 2,0 Gew.-% Gew.-% einer 10 %-igen Gebrauchslösunglösung aus einer 0,2 %-igen V₂O₅ Stammlösung (in saurem Butylphosphit/Butylphosphat) in Acetyltributylcitrat
d) 0,5 Gew.-% Milchsäure

### Rezeptur C2:

Wie C1, jedoch werden, um die Viscosität herabzusetzen, 20 Gew.-% Sirup durch 20 Gew.-% Methylmethacrylat ersetzt.

**Tabelle:**

| Rezeptur | A1 | A2 | B1 | B2 | C1 | C2 |
|---|---|---|---|---|---|---|
| Polymerisationszeit [min] *) | 80 - 90 | 150 - 200 | 60 - 70 | 70 - 80 | 50 - 60 | 70 - 80 |
| Max. Polymerisationstemperatur [°C] | 100 | 90 | 130 | 100 | 110 | 100 |
| Topfzeit [min] **) | 20 - 30 | 40 - 50 | 20 - 30 | 30 - 40 | 10 - 20 | 20 - 30 |
| Blasenbildung bei Klebschichten < 3 mm | Nein | Nein | Nein | Nein | Ja | Ja |
| Blasenbildung bei Klebschichten > 3 mm | Nein | Nein | Ja | Ja | Ja | Ja |
| Optik | Klar | Klar | Gelbstich | Gelbstich | Klar | Klar |

| Restmonomergehalt Methylmethacrylat [Gew.-%] | | | | | | |
|---|---|---|---|---|---|---|
| ohne Tempern | 5,3 | 5,9 | 6,4 | 7,5 | 7,4 | 6,8 |
| mit Tempern (5h bei 80°C) | 0,4 | 0,4 | 1,8 | 1,8 | 0,2 | 0,3 |

| Vicat Erweichungstemperatur ISO 306 Methode B [°C] | | | | | | |
|---|---|---|---|---|---|---|
| Ohne Tempern | 93 | 93 | 70 | 68 | 91,5 | 95 |
| Mit Tempern (5h bei 80°C) | 98 | 98 | 96 | 96 | 99,6 | 99 |

| Zugscherfestigkeit, 1 mm [Mpa] ***) | | | | | | |
|---|---|---|---|---|---|---|
| Ohne Tempern | 40 | 39 | 36 | | | |
| Mit Tempern (5h bei 80°C) | 50 | 44 | 52 | | | |
| Viscosität [mPa s] ****) | 2000 -2700 | 500 | 1600 - 2000 | 300 - 400 | 2000 - 2700 | 500 |

| Gelbwert (D65/10°) | | | | | | |
|---|---|---|---|---|---|---|
| Ohne Tempern | 0,32 | 0,54 | 0,30 | 0,31 | | |
| Mit Tempern (5h bei 80°C) | 0,42 | 0,44 | 0,77 | 0,94 | | |

| | | | | | | |
|---|---|---|---|---|---|---|
| *) = Polymerisationszeit [min]: Ein Ansatz von ca. 50 ml reaktives Gemisch wird bei 20 °C temperiert. Die Polymerisationszeit [min] ist die Zeit vom Beginn der Reaktion (Zeitpunkt zu dem alle Komponenten miteinander vermengt wurden) bis zum Erreichen des Temperaturmaximums. | | | | | | |
| **) = Topfzeit [min]: Ein Ansatz von ca. 200 ml reaktivem Gemisch wird bei 20 °C temperiert. Die Topfzeit ist die Zeit vom Beginn der Reaktion bis zum Erreichen von 30 °C. | | | | | | |
| ***) Zugscherfestigkeit, 1mm [Mpa]: VDI-Richtlinie 3821, Punkt 8.2.1, Prüfung in Anlehung an DIN 53 283 bzw. ASTM 3163-73 | | | | | | |
| ****) = Viscosität [mPa s], gemessen mit Brookfieldspindel II, 12 Upm, 20 °C. | | | | | | |

## Patentansprüche

1. Klebverbund aus mindestens zwei Teilen aus einem thermoplastischen oder thermoelastischen Kunststoff oder Teilen aus einem festen polymeren Naturstoff und einer sich zwischen den Teilen befindlichen Klebeschicht herstellbar, indem die Teile in einem Abstand von 0,01 bis 10 mm voneinander fixiert und zwischen die Teile ein zuvor entgastes reaktives Gemisch
a) eines Sirups aus
10 - 50 Gew.-% Polymethylmethacrylat und
50 bis 90 Gew.-% Methylmethacrylat
b) 0,05 bis 2 Gew.-%, bezogen auf a), eines Polymerisationsinitiators und
c) 0,0001 bis 0,1 Gew.-%, bezogen auf a), einer Reaktionskomponente A auf Vanadiumbasis sowie
d) 0,005 bis 0,1 Gew.-%, bezogen auf a), einer weiteren Reaktionskomponente B
einbringt und als Klebeschicht aushärten lässt,
**dadurch gekennzeichnet, daß**
als Reaktionskomponente B ein schwefelhaltiger, monofunktioneller Molekulargewichtsregler eingesetzt wird.

2. Klebverbund nach Anspruch 1, **dadurch gekennzeichnet, daß** man als Reaktionskomponente B Dodecylmercaptan einsetzt.

3. Klebverbund nach Anspruch 1 oder 2, **dadurch gekennzeichnet, daß** man die Viskosität des reaktiven Gemischs gegebenenfalls durch Zugabe von Methylmethacrylat auf einem Wert von 100 bis 1000 mPas einstellt.

4. Klebverbund nach einem oder mehreren der Ansprüche 1 bis 3, **dadurch gekennzeichnet, daß** das reaktive Gemisch zusätzlich ein Bläuungsmittel in einer Konzentration von 0,001 bis 1 ppm enthält.

5. Klebverbund nach einem oder mehreren der Ansprüche 1 bis 4 , **dadurch gekennzeichnet, daß** Teile aus Acrylnitril-Butadien-Styrol (ABS), Celluloseacetatbutyrat (CAB), Polymethylmethacrylat (PMMA), Polystyrol PS), Polyvinylchlorid (PVC), Styrol/α-Styrol-Copolymer (S/MS), ungesättigte Polyester (UP) oder Holz miteinander verklebt sind.

6. Klebverbund nach Anspruch 5, **dadurch gekennzeichnet, daß** Teile aus gegossenem Polymethylmethacrylat miteinander verklebt sind.

7. Klebverbund nach Anspruch 6, **dadurch gekennzeichnet, daß** der Klebverbund nach dem Aushärten zusätzlich bei Temperaturen zwischen 65 und 85 °C getempert wird.

8. Klebverbund nach Anspruch 6 oder 7, **dadurch gekennzeichnet, daß** die verklebten Teilen zusätzlich bei Temperaturen zwischen 110 und 170 °C thermisch verformt wurden.

9. Mehrkomponentenklebstoff-System geeignet zur Herstellung eines reaktiven Gemischs zur Erzeugung eines Klebverbunds nach einem oder mehreren der Ansprüche 1 bis 8, bestehend aus
a) dem Polymethylmethacrylat/Methylmethacrylat-Sirup
b) dem Polymerisationsinitiator
c) der Reaktionskomponente A auf Vanadiumbasis und
d) der Reaktionskomponente B, die ein schwefelhaltiger, monofunktioneller Molekulargewichtsregler ist,
mit der Maßgabe, daß zumindest die Komponente b) getrennt von der Komponente a) vorliegen muß.

10. Verwendung eines schwefelhaltigen, monofunktionellen Molekulargewichtsreglers als Reaktionskomponente in einem Mehrkomponenten-Klebstoffsystem nach Anspruch 9.

## Claims

1. Adhesive composite which can be produced from at least two parts made up of a thermoplastic or thermoelastic plastic or parts made up of a solid natural polymeric material and an adhesive layer located between the parts, by fixing the parts at a spacing of 0.01 to 10 mm from one another and introducing between the parts a previously degassed reactive mixture of
a) a syrup of
10 - 50 wt.% of polymethyl methacrylate and
50 to 90 wt.% of methyl methacrylate
b) 0.05 to 2 wt.%, based on a), of a polymerisation initiator and
c) 0.0001 to 0.1 wt.%, based on a), of a vanadium-based reaction component A and
d) 0.005 to 0.1 wt.%, based on a), of another reaction component B
and allowing it to cure as the adhesive layer,
**characterised in that**
a sulphur-containing, monofunctional molecular weight regulator is used as reaction component B.

2. Adhesive composite according to claim 1, **characterised in that** dodecyolmercaptan is used as reaction component B.

3. Adhesive composite according to claim 1 or 2, **characterised in that** the viscosity of the reactive mixture is optionally adjusted to a value of 100 to 1000 mPas by the addition of methyl methacrylate.

4. Adhesive composite according to one or more of claims 1 to 3, **characterised in that** the reactive mixture additionally contains a blueing agent in a concentration of 0.001 to 1 ppm.

5. Adhesive composite according to one or more of claims 1 to 4, **characterised in that** parts made of acrylonitrile-butadiene-styrene (ABS), cellulose acetate butyrate (CAB), polymethyl methacrylate (PMMA), polystyrene (PS), polyvinylchloride (PVC), styrene/α-styrene copolymer (S/MS), unsaturated polyester (UP) or wood are adhesively bonded together.

6. Adhesive composite according to claim 5, **characterised in that** parts made of cast polymethyl methacrylate are adhesively bonded together.

7. Adhesive composite according to claim 6, **characterised in that** the adhesive composite is additionally tempered at temperatures between 65 and 85°C after curing.

8. Adhesive composite according to claim 6 or 7, **characterised in that** the adhesively bonded parts are additionally thermally deformed at temperatures between 110 and 170°C.

9. Multi-component adhesive system suitable for producing a reactive mixture for making an adhesive composite according to one or more of claims 1 to 8, consisting of
a) the polymethyl methacrylate/methyl methacrylate syrup
b) the polymerisation initiator
c) the vanadium-based reaction component A and
d) the reaction component B which is a sulphur-containing, monofunctional molecular weight regulator,
with the proviso that at least component b) must be present separately from component a).

10. Use of a sulphur-containing, monofunctional molecular weight regulator as a reaction component in a multi-component adhesive system according to claim 9.

## Revendications

1. Composite adhésif constitué d'au moins deux fractions composées de matière synthétique thermoplastique ou thermoélastique ou de fractions composées d'une matière naturelle de polymère solide et d'une couche adhésive se trouvant entre les fractions, dans lequel les fractions sont fixées l'une par rapport à l'autre à un intervalle de 0,1 à 10 mm et, entre les fractions, est introduit un mélange réactif préalablement dégazé composé
a) d'un agent sirupeux composé de
10 à 50 % en poids de polyméthylméthacrylate et de
50 à 90 % en poids de méthylméthacrylate
b) de 0,05 à 2 % par rapport à a) d'un initiateur de polymérisation et
c) de 0,0001 à 0,1 % en poids par rapport à a) d'un composé réactif A à base de vanadium ainsi que
d) de 0,005 à 0,1 % en poids par rapport à a) d'un autre composé réactif B
et qui en tant que couche adhésive se solidifie,
**caractérisé en ce que**
comme composant réactif B est utilisé un agent régulateur du poids moléculaire monofonctionnel contenant du soufre.

2. Composite adhésif selon la revendication 1,
**caractérisé en ce que**
comme composé réactif B on utilise le dodécylmercaptan.

3. Composite adhésif selon les revendications 1 ou 2,
**caractérisé en ce que**
la viscosité du mélange réactif, le cas échéant par l'addition de méthylméthacrylate, est modifiée pour être comprise entre 100 et 1 000 mPas.

4. Composite adhésif selon l'une ou plusieurs des revendications 1 à 3,
**caractérisé en ce que**
le mélange réactif contient en outre un agent de bleuissage selon une concentration comprise entre 0,001 et 1 ppm.

5. Composite adhésif selon l'une ou plusieurs des revendications 1 à 4,
**caractérisé en ce que**
des fractions d'acrylnitril-butadiène-styrène (ABS), d'acétobutyrate de cellulose (CAB), de polyméthylméthacrylate (PMMA), de poly styrène (PS), de polychlorure de vinyle (PVC), de copolymère styrène / α-styrène (S/MS), de polyester insaturé (UP) ou de bois sont collées les unes avec les autres.

6. Composite adhésif selon la revendication 5,
**caractérisé en ce que**
des fractions de polyméthylméthacrylate coulé sont collées les unes avec les autres.

7. Composite adhésif selon la revendication 6,
**caractérisé en ce que**
le composite adhésif est en outre après le durcissement amené à des températures comprises entre 65 et 85 °C.

8. Composite adhésif selon la revendication 6 ou 7,
**caractérisé en ce que**
les fractions collées sont en outre déformées thermiquement à des températures comprises entre 110 et 170 °C.

9. Système de substances adhésives multicomposant adapté à la fabrication d'un mélange réactif pour la production d'un composite adhésif selon l'une ou plusieurs des revendications 1 à 8, composé
a) de l'agent sirupeux de polyméthylméthacrylate / méthylméthacrylate
b) de l'initiateur de polymérisation
c) du composant réactif A à base de vanadium et
d) du composant réactif B, qui est un agent régulateur du poids moléculaire monofonctionnel contenant du soufre,
à condition qu'au moins le composant b) soit séparé du composant a).

10. Utilisation d'un agent régulateur du poids moléculaire monofonctionnel contenant du soufre, comme composant réactif dans un système de substances adhésives multicomposant selon la revendication 9.
